# EUROPEAN PATENT SPECIFICATION

(11) **EP 3 702 559 B1**
(45) Date of publication and mention of the grant of the patent: **30.11.2022**
(21) Application number: 18869963.1
(22) Date of filing: 26.10.2018
(51) Int. Cl.: E05B 79/06, E05B 85/12, F16B 5/06, F16B 12/20, F16B 21/06, F16B 21/07, E05B 83/16, E05B 85/10

(54) **MOUNTING STRUCTURE AND ATTACHMENT STRUCTURE EQUIPPED WITH SAME**
MONTAGESTRUKTUR UND DAMIT AUSGESTATTETE BEFESTIGUNGSSTRUKTUR
STRUCTURE DE MONTAGE ET STRUCTURE DE FIXATION ÉQUIPÉE DE CETTE DERNIÈRE

(30) Priority: 26.10.2017 JP 2017206869
(43) Date of publication of application: 02.09.2020
(73) Proprietor: HI-LEX Corporation, Takarazuka-shi, Hyogo 665-0845 (JP)
(72) Inventor: ITO, Koichi, Takarazuka-shi, Hyogo 665-0845 (JP); YOKOMATSU, Mutsuhiro, Takarazuka-shi, Hyogo 665-0845 (JP)
(74) Representative: Epping - Hermann - Fischer
(86) International application number: PCT/JP2018/039880
(87) International publication number: WO 2019/083013

(56) References cited:
- WO-A1-00/62970
- JP-A- H0 972 345
- JP-A- S51 106 915
- JP-A- 2001 317 256
- JP-Y1- S4 910 669
- US-A- 4 189 248
- US-A1- 2014 199 116
- US-B1- 6 209 175

## Description

### Technical Field

The present invention relates to a mounting structure and an attachment structure including the mounting structure.

### Background Art

A hood or a trunk lid of an automobile is opened or closed by operating an operation lever attached to a side of a cabin. For example, the operation lever can be attached in a freely turnable or pullable manner to a panel which forms the cabin. By turning or pulling the operation lever, a wire is pulled, a latch of a latch mechanism which maintains the hood or the trunk lid connected to the wire in a closed state is detached, and the hood or the trunk lid is set to an open state.

For example, Patent Literature (hereinafter, referred to as "PTL") 1 discloses an inside handle as an operation lever for opening and closing a trunk lid, in which a lock releasing lever for releasing a trunk lock by turn is freely turnably provided on a side of a vehicle body, and the inside handle is attached to a shaft portion of the lock releasing lever.

The shaft portion of the lock releasing lever is columnar, and is disposed through a base member attached to the vehicle body. At a leading-end of the shaft portion, a serration is formed into which a serration provided in a hole of the inside handle is fitted, and thus, the lock releasing lever engages with the inside handle in a state where a relative angular position can be adjusted.

Further, a flange-like claw portion is provided at a leading-end split, columnar outer peripheral edge at an end of the serration of the lock releasing lever. The claw portion engages with a step portion formed within the hole of the inside handle when the serrations are fitted into each other, and thus, both are prevented from coming off. An inside lever is attached to the lock releasing lever inside a trunk room. The lock releasing lever turns as the inside handle rotates around the shaft portion, and thus, the trunk lock can be released from the inside of the trunk room. PTL 2 discloses a locking device that includes a projecting member and a retaining member. The projecting member has a bulbous head which is retained by the retaining member which includes a body portion having a passageway or void formed therethrough.

### Citation List

### Patent Literature

PTL 1
   Japanese Patent Application Laid-Open No. 2001-317256
PTL 2
   US 6209175 B1

### Summary of Invention

### Technical Problem

In a mounting structure in which an inside handle is rotatably mounted, a leading-end split claw portion at a leading-end of a shaft of a lock releasing lever includes two arc-shaped, half-split columnar claw portions, and the leading-end split claw portion is inserted into a hole of the inside handle to be engaged with a step portion within the hole. Accordingly, in a case where it is necessary to detach the inside handle from the shaft of the lock releasing lever for reattachment or the like for a predetermined number of times after attaching the inside handle to a shaft portion, the columnar claw portions hardly elastically deform and are difficult to detach.

Further, in the case of a configuration in which two or more claw portions each having an arc-shape in the cross section and having a curved plate-shape are disposed apart from each other along the circumference so as to form a shape corresponding to the external shape of the engagement counterpart, a stress concentrates on the root of the arc-shape due to a low flexibility of the claw portion when releasing the state of engagement between the claw portion and the step portion, and thus, breakage is likely to occur, for example, the claw portion breaks.

An object of the present invention is to provide a mounting structure and an attachment structure which enable a mounting member to be mounted on a member to be mounted (hereinafter, referred to as "mounted member") to be easily attached and/or detached without breakage even in a case where the mounting member is attached and/or detached.

### Solution to Problem

The mounting structure of the present invention comprises:
a mounting member; and
a mounted member on which the mounting member is mounted, wherein:
   the mounting member includes a mounting member-main body, and a fitting portion which is provided in the mounting member-main body;
   the mounted member includes a cover portion, a mounted member-main body which is freely rotatable mounted to the cover portion so as to be mounted via the cover portion, and a portion to be fitted which is provided in the mounted member-main body;
   the fitting portion includes a shaft portion protruding and extending from the mounting member-main body, a head portion provided on a side of a leading-end of the shaft portion, and a locking portion provided in a peripheral direction of the shaft portion between the shaft portion and the head portion;
   the fitted portion includes three or more flat plate-shaped extension portions protruding and extending from the mounted member-main body, and portions to be locked which are provided on respective sides of leading-ends of the flat plate-shaped extension portions;
   the flat plate-shaped extension portions are respectively disposed with their wide surfaces facing the head portion at positions where the flat plate-shaped extension portions surround and form an inner space in which the head portion is accommodated;
   the root portions of the flat extension portions that are respectively fixed to mounted member-main body are linear along the circumferential direction of the head portion;
   the locked portion is formed linear along the circumferential direction of the head portion;
   the mounting member is fitted into the mounted member by engagement between the locking portion and the portion to be locked by inserting the head portion between the flat plate-shaped extension portions to cause the flat plate-shaped extension portions to elastically deform and the head portion to be accommodated between the flat plate-shaped extension portions; and
   fitting between the mounting member and the mounted member is released by releasing the engagement between the locking portion and the portion to be locked by application of an external force so as to separate the mounting member from the mounted member.

The attachment structure of the present invention comprises:
the mounting structure having the above-described configuration; and
an attachment member to which the mounting structure is attached, wherein:
   the mounted member which forms the mounting structure is attached to the attachment member, and
   the attachment member includes a prevention portion which prevents the mounting structure from being attached to an attachment position in a state where the mounted member is attached to the attachment member, and which allows the mounting structure to be attached to the attachment position in a state where the mounted member is separated from the mounting member.

### Advantageous Effects of Invention

The present invention enables a mounting member to be mounted on a mounted member to be easily attached and/or detached without breakage even in a case where the mounting member is attached and/or detached.

### Brief Description of Drawings

FIG. 1 is a schematic overall view of an attachment structure including a mounting structure according to an embodiment of the present invention;
FIG. 2 is a diagram illustrating a state in which a mounting member is separated from a mounted member in the attachment structure of FIG. 1;
FIG. 3 is a cross-sectional view of a configuration of a main portion of the attachment structure of FIG. 1;
FIG. 4 is a cross-sectional view of the attachment structure of FIG. 1 in a state where the mounted member is separated from the mounting member;
FIG. 5 is a diagram (rear view) of the mounting member viewed from a fitting portion;
FIG. 6 is a cross-sectional view taken along of line A-A of FIG 5;
FIG. 7 is a front view of the mounted member in FIG. 2;
FIG. 8 is a rear view of the same mounted member; and
FIG. 9 is a perspective view of a partial cross-section of a portion to be fitted (hereinafter, referred to as "fitted portion") illustrating flat plate-shaped extension portions of the same mounted member.

### Description of Embodiments

Hereinafter, an embodiment of the present invention will be described in detail with reference to the drawings.

### <Overall Configuration of Attachment Structure 100>

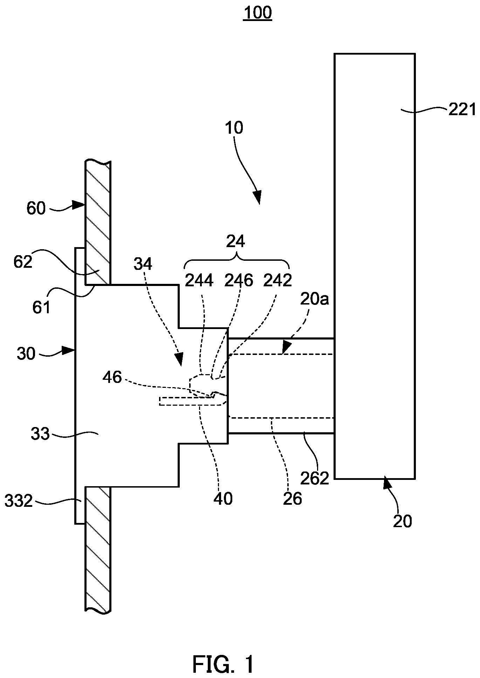

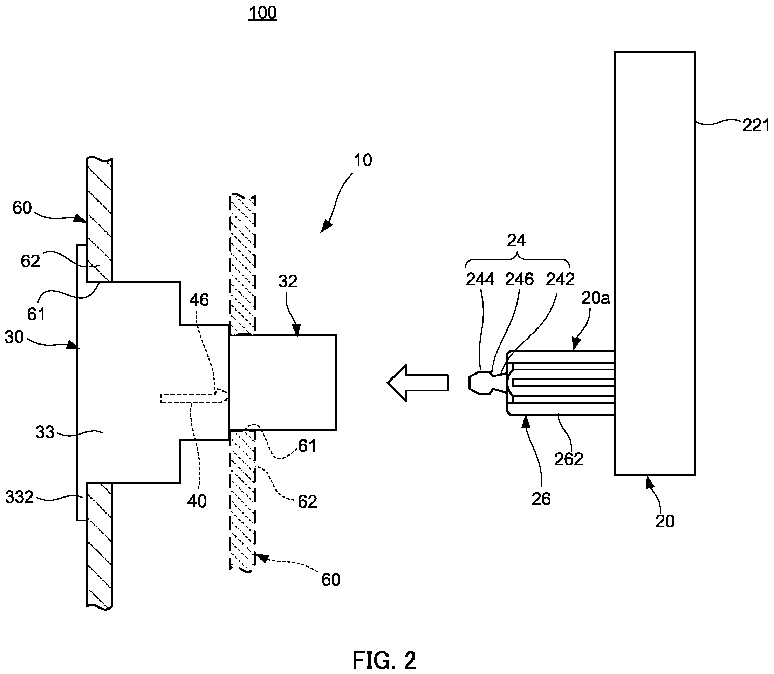

As illustrated in FIG. 1 and FIG. 2, attachment structure 100 includes mounting structure 10, and attachment member 60 to which mounting structure 10 is attached.

Mounting structure 10 includes mounting member 20, and member 30 to be mounted (hereinafter, referred to as "mounted member 30") on which mounting member 20 is mounted. Mounting structure 10 is attached to attachment member 60 by fitting mounting member 20 into mounted member 30 which is mounted to attachment member 60 in a state of being separated from mounting member 20.

In the present embodiment, mounting structure 10 is a structure including an operation lever which enables, within a cabin, opening operation of a hood or a trunk lid as an example of mounting structure 10.

In the present embodiment, mounting structure 10 is a structure including a hood lever for operating the opening operation of the hood, and attachment structure 100 including mounting structure 10 is an attachment structure of the hood lever which enables opening and closing of the hood within the cabin. However, the present invention is not limited thereto. Attachment structure 100 can be applied to any application as long as attachment structure 100 is a structure including attachment member 60, mounted member 30 which is attached to attachment member 60, and mounting member 20 which is detachably mounted on mounted member 30. For example, attachment structure 100 may also be configured to include an opening and closing operation lever of a trunk lid, which is disposed within the cabin, and opens and closes the trunk lid; an opening and closing lever which turns by operation of the opening and closing operation lever to be mounted, and is connected to an opening and closing mechanism which opens and closes the trunk lid; and an attachment portion to which the opening and closing lever is attached.

### <Attachment Member 60>

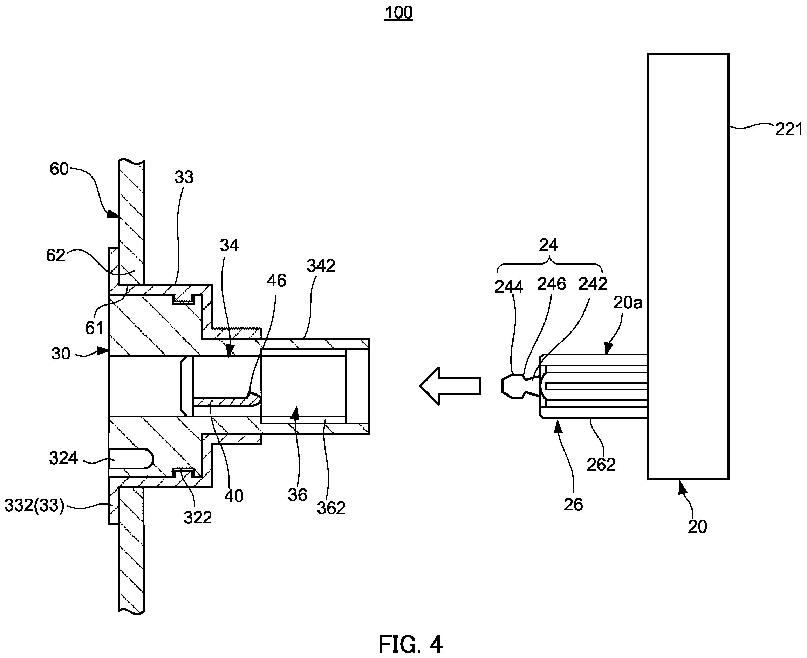

Attachment member 60 illustrated in FIG. 1 to FIG. 4 has a fitting structure which allows mounted member 30 to be attached. Attachment member 60 may be configured with any member as long as attachment member 60 is a member on the side of a vehicle body as an example of the embodiment, and may be the vehicle body itself or a member such as a panel to be attached to the vehicle body. Attachment member 60 is fitted into mounted member 30 so as to relatively move to mounted member 30 when mounting structure 10 including mounting member 20 and mounted member 30 on which mounting member 20 is mounted is attached to attachment member 60.

At a part to which mounting structure 10 is attached, attachment member 60 includes opening edge portion 62 as an example of a prevention portion which prevents the attachment in a state of being combined with mounting member 20 and mounted member 30. In the present embodiment, attachment member 60 is a panel within the cabin, and in the panel, opening edge portion 62 is opening edge portion 62 of opening portion 61 into which mounting member 20 is inserted such that a part (portion 34 to be fitted (hereinafter, referred to as "fitted portion 34")) on which mounting member 20 is mounted faces the inside of the cabin. When mounting member 20 in a state where mounting member 20 is combined with mounted member 30 is inserted from the outside of the cabin into opening portion 61, opening edge portion 62 around opening portion 61 becomes a hindrance as an example of the prevention portion to prevent mounting member 20 from being inserted. Thus, mounting structure 10 in which mounting member 20 is combined with mounted member 30 cannot be attached. Further, the attachment from the side of the cabin cannot be performed since mounting member 20 in a state where mounting member 20 is combined with mounted member 30, and flange portion 332 of mounted member 30 are prevented by opening edge portion 62 from entering opening portion 61. In a case where mounting member 20 and mounted member 30 form the mounting structure, opening edge portion 62 which functions as the prevention portion abuts on flange portion 332 and operation portion 221 to prevent fitting into opening portion 61, and prevents mounted member 30 from being fitted into attachment member 60 in a state where mounting member 20 is mounted on mounted member 30. Flange portion 332 functions as the prevention portion with respect to opening edge portion 62, and also functions as a fixing portion since mounted member 30 is fixed to attachment member 60 by fixing flange portion 332 to attachment member 60.

As shown by a dotted line of FIG. 2, attachment member 60 may be interposed between mounting member 20 and mounted member 30 when mounting member 20 and mounted member 30 form the mounting structure in a state where mounted member 30 is inserted into opening portion 61, and thus, e.g. an end portion on the side of the mounting portion of member to be mounted-main body 32 (hereinafter, referred to as "mounted member-main body 32") may abut on opening edge portion 62 to prevent movement to the side of the mounting portion.

### <Mounting Member 20>

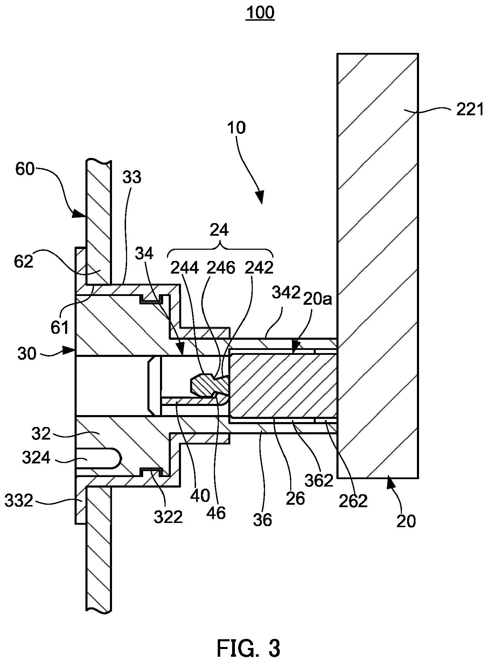

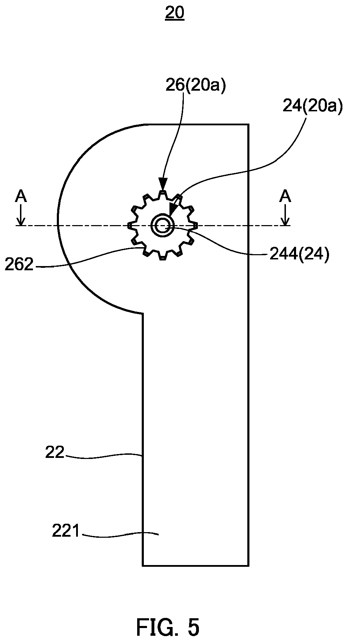

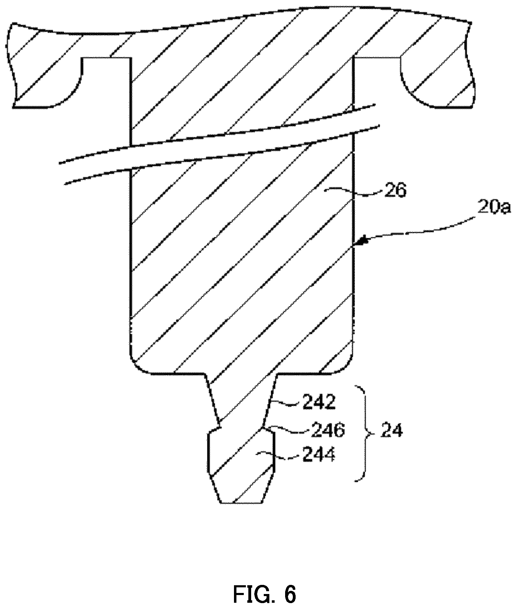

Mounting member 20 illustrated in FIG. 3 to FIG. 6 is removably mounted on mounted member 30 to form mounting structure 10.

Mounting member 20 includes mounting member-main body 22, fitting portion 24 provided in mounting member-main body 22, and second fitting portion 26.

In the present embodiment, as illustrated in FIG. 1 to FIG. 5, mounting member-main body 22 includes operation portion 221 to be operated directly by a user, and communicates an action thereof to mounted member 30.

In the present embodiment, mounting member-main body 22 is formed to be pillar-like, and operation portion 221 is provided in an easily grippable outer peripheral portion. Mounting member-main body 22 has a length sufficient for a user to grip the outer peripheral surface to operate. In the present embodiment, mounting member-main body 22 is the hood lever body itself for opening and closing the hood.

In the present embodiment, operation portion 221 is provided at a position apart from fitting portion 24 in mounting member-main body 22.

Fitting portion 24 is provided on a side of one end of mounting member-main body 22. Fitting portion 24 is fitted into fitted portion 34 on the side of mounted member 30 so as to cause mounting member 20 to be fitted into mounted member 30.

In the present embodiment, fitting portion 24 is provided to be fitted into fitted portion 34 in a direction crossing an extending direction of mounting member-main body 22, specifically, in a direction orthogonal thereto. Fitting portion 24 is fitted with fitted portion 34 at a leading-end portion of protruding portion 20a which protrudes from one end portion of mounting member-main body 22, orthogonally to the extending direction thereto, and fitting portion 24 is fitted with fitted portion 34 in the protruding direction of protruding portion 20a. Protruding portion 20a is a pillar-like body which may have any cross-sectional shape, such as a prismatic body, a columnar body, or an elliptic columnar body. Protruding portion 20a here is a columnar body.

Fitting portion 24 includes shaft portion 242 protruding and extending from mounting member-main body 22, head portion 244 provided on a side of a leading-end of shaft portion 242, and locking portion 246 provided in a peripheral direction of shaft portion 242 between shaft portion 242 and head portion 244.

Shaft portion 242 is provided on the side of the leading-end portion of protruding portion 20a, and is disposed coaxially with the central shaft of protruding portion 20a.

Head portion 244 on the side of the leading-end of shaft portion 242 has a larger outer diameter than shaft portion 242. Shaft portion 242 may be configured in any way as long as shaft portion 242 has a smaller outer diameter than head portion 244, and may have a truncated cone shape or may be a columnar body, an elliptic columnar body or a prismatic body. In the present embodiment, shaft portion 242 is formed to have a truncated cone shape.

Head portion 244 is inserted between flat plate-shaped extension portions 40 of fitted portion 34 (see FIG. 3), and thus, flat plate-shaped extension portions 40 elastically deform, and head portion 244 is accommodated between flat plate-shaped extension portions 40.

Locking portion 246 engages with portion 46 to be locked (hereinafter, referred to as "locked portion 46") of fitted portion 34 when head portion 244 is accommodated between flat plate-shaped extension portions 40 of fitted portion 34. Thus, mounting member 20 is fitted into mounted member 30, specifically, fitting portion 24 is fitted into fitted portion 34.

Locking portion 246 is provided at a rear end portion of shaft portion 242 so as to extend in a radial direction from the outer periphery of shaft portion 242.

In the present embodiment, locking portion 246 has a tapered surface which is continuous to a side of a rear end of head portion 244, and which is tapered from an outer peripheral edge portion on the side of the leading-end toward an outer peripheral edge portion on the side of the base end. In other words, the tapered surface of locking portion 246 is inclined in a direction opposite to the pulling-out direction of head portion 244 while extending in the radial direction from the outer periphery of shaft portion 242. Thus, locked portion 46 slides on the tapered surface, and more easily come off when moving head portion 244 in the pulling-out direction from the below-described state where head portion 244 is inserted between flat plate-shaped extension portions 40 and engages with locked portion 46.

Second fitting portion 26 engages with second portion 36 to be fitted (hereinafter, referred to as "second fitted portion 36") when mounting member 20 is mounted on mounted member 30.

In the present embodiment, second fitting portion 26 is fitted into second fitted portion 36, and thus, regulates that the movement relatively takes place only in the mounting direction.

In the present embodiment, second fitting portion 26 is provided on a side of a base end of protruding portion 20a. In the present embodiment, second fitting portion 26 is provided on the outer periphery of protruding portion 20a. In the embodiment, second fitting portion 26 includes a plurality of splines 262 provided on the outer periphery of protruding portion 20a, in which splines 262 extend in the moving direction (axial direction) when being fitted, and are arranged circumferentially. Splines 262 are fitted freely movably, only in the moving direction when performing the fitting, into projection portions 362 between the splines provided in second fitted portion 36 on the side of mounted member 30.

### <Mounted Member 30>

Mounting member 20 is removably mounted on mounted member 30 illustrated in FIG. 1 to FIG. 4 by fitting portion 24 of mounting member 20 being fitted into fitted portion 34.

Mounted member 30 can be attached to attachment member 60 (see FIG. 1 to FIG. 4) in a state of being separated from mounting member 20.

Mounted member 30 includes mounted member-main body 32, fitted portion 34 provided in mounted member-main body 32, cover portion 33, and second fitted portion 36.

Mounted member-main body 32 is mounted on the side of attachment member 60. According to the invention, mounted member-main body 32 is freely rotatably mounted within cover portion 33.

Mounted member-main body 32 is mounted via cover portion 33 on the panel which is attachment member 60, .cylindrical portion 342 protrudes from opening portion 61 of the panel, and fitted portion 34 which is provided in cylindrical portion 342 faces the inside of the cabin. Further, cover portion 33 includes flange portion 332, and is fixed via flange portion 332 to the panel as an example of attachment member 60 from the outside of the cabin. Cover portion 33 is disposed so as to protrude from opening portion 61 into the inside of the cabin with respect to the panel, and is disposed such that the opening portion of cover portion 33 faces the side of the cabin.

In the present embodiment, mounted member-main body 32 is a columnar body.

On the outer periphery of mounted member-main body 32, groove portion 322 is formed which extends circumferentially. A projection of cover portion 33 is disposed within groove potion 322. Thus, mounted member-main body 32 can be guided, without detaching in the extending direction of the rotating shaft with respect to cover portion 33, to the protrusion within groove potion 322 to rotatably move circumferentially.

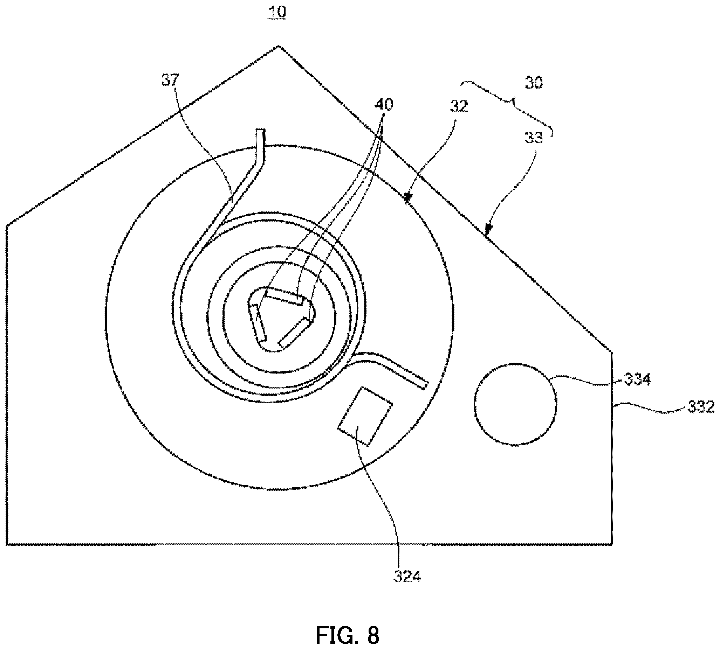

In the present embodiment, mounted member-main body 32 transmits power to other members by rotation. In the present embodiment, as illustrated in FIG. 3, wire end-fixing portion 324 is provided on the outer periphery of mounted member-main body 32, and a wire end (not illustrated) on a side of one end portion of the wire is fixed to wire end-fixing portion 324. The other end portion of the wire is connected, for example, to a latch of a hood open locking mechanism which locks the hood to be energized in the opening direction in a closed state. The wire end on the side of the one end portion is pulled, and thus, the wire turns the latch to release the lock in the closed state of the hood energized in the opening direction. Further, mounted member-main body 32 is energized by energizing member 37 (see FIG. 8) in a direction opposite to the direction of opening the hood via the wire by rotating in one circumferential direction with respect to cover portion 33 to pull the wire end.

On the side of mounting member 20 of mounted member-main body 32, cylindrical portion 342 is provided to protrude coaxially. Cylindrical portion 342 is provided to protrude to the outside via the opening portion of cover portion 33.

Cylindrical portion 342 is provided with fitted portion 34 and second fitted portion 36.

Fitted portion 34 is fitted into fitting portion 24. Fitted portion 34 is provided in cylindrical portion 342 projecting from a central portion of mounted member-main body 32 to the side of mounting member 20.

Fitted portion 34 includes flat plate-shaped extension portion 40, and locked portion 46.

Each flat plate-shaped extension portion 40 has flexibility. Within cylindrical portion 342, three or more flat plate-shaped extension portions 40 are provided to protrude from mounted member-main body 32.

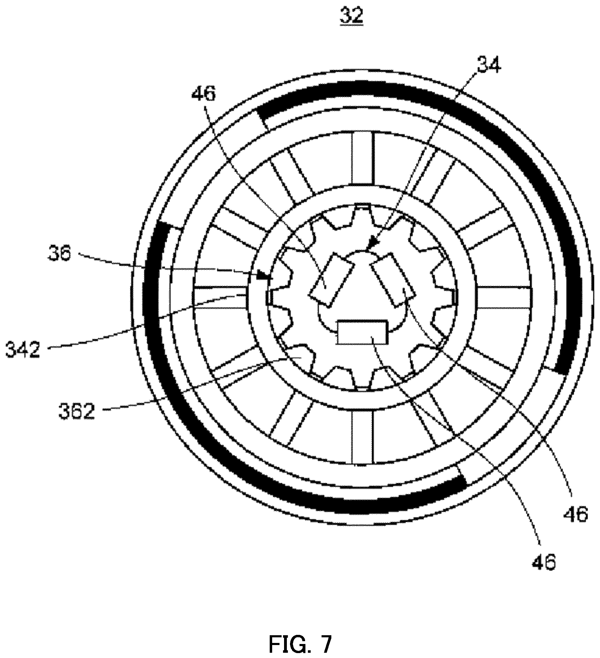

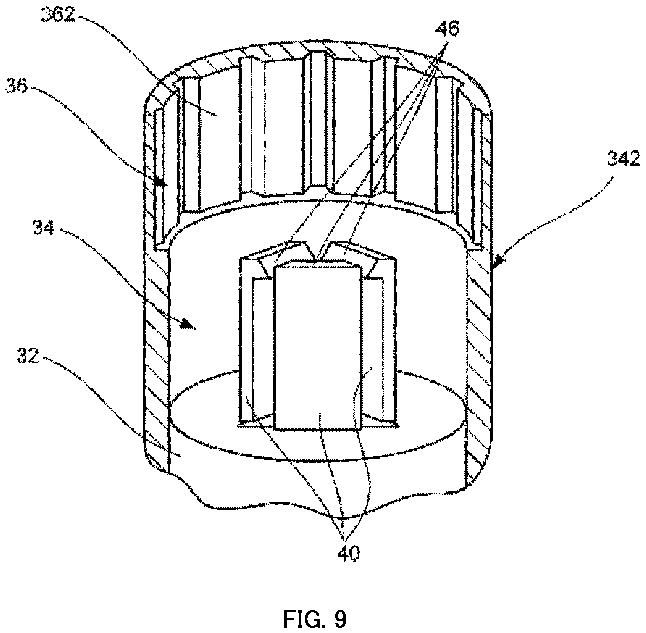

Each flat plate-shaped extension portion 40 is disposed to form an inner space along the axial direction in which head portion 244 is inserted. Here, three flat plate-shaped extension portions 40 are disposed such that head portion 244 is inserted into the inner space formed inside flat plate-shaped extension portions 40. That is, flat plate-shaped extension portions 40 are respectively disposed at positions where flat plate-shaped extension portions 40 surround and form the inner space in which head portion 244 is accommodated. As illustrated in FIG. 7 to FIG. 9, flat plate-shaped extension portions 40 here are disposed in a regular triangular shape.

Head portion 244 is inserted between flat plate-shaped extension portions 40, and thus, flat plate-shaped extension portions 40 elastically deform, and accommodate head portion 244.

Locked portion 46 is provided on the side of the leading-end of each flat plate-shaped extension portion 40, and engages with locking portion 246 when head portion 244 is accommodated in flat plate-shaped extension portions 40.

Specifically, locked portion 46 is provided to be toward the inner space of flat plate-shaped extension portions 40 and to cross the extending direction on the side of the leading-end of each flat plate-shaped extension portion 40, and engages with locking portion 246 which is inclined on the side of the base end of head portion 244.

The state of engagement between locked portion 46 and locking portion 246 is released by application of an external force so as to separate mounting member 20 from mounted member 30. In this respect, since locking portion 246 is the tapered surface which is inclined in the direction opposite to the pulling-out direction of head portion 244, it is easier to pull locking portion 246 from locked portion 46 compared to a case where locking portion 246 is a surface orthogonal to the shaft direction of shaft portion 242. The fitting between mounting member 20 and mounted member 30 is released by the above-described releasing of the state of engagement between locked portion 46 and locking portion 246.

Second fitted portion 36 is fitted into second fitting portion 26.

Second fitted portion 36 is provided with projection portion 362 which slides in a moving direction, and which engages in a direction perpendicular to the moving direction when second fitted portion 36 is fitted into second fitting portion 26.

In the present embodiment, second fitted portion 36 is formed on the side of the leading-end of cylindrical portion 342.

On the inner peripheral surface of cylindrical portion 342, a plurality of splines are formed which extend along the axial direction of cylindrical portion 342, and which are arranged in the inner circumferential direction thereof. Projection portions 362 are formed between the splines, and are fitted freely movably, only in the axial direction of cylindrical portion 342, into splines 262 of second fitting portion 26 on the side of mounting member 20.

Second fitted portion 36 is fitted into second fitting portion 26 when fitted portion 34 is fitted into fitting portion 24.

With respect to mounting structure 10 configured as described above, a user turns mounting member 20, and thus, mounted member-main body 32 rotates with respect to cover portion 33 in mounted member 30 which is fitted via fitting portion 24 and fitted portion 34. Thus, the hood can be opened by pulling the wire fixed to wire end-fixing portion 324 of mounted member-main body 32 in the circumference direction, moving the wire, and detaching the latch of the hood open locking mechanism connected to the other wire end of the wire.

### <Assembly Method of Attachment Structure 100>

When assembling attachment structure 100 by attaching mounting structure 10 to the panel within the cabin, in which the panel is attachment member 60, mounting member 20 is detached from mounted member 30.

Attachment member 60 includes opening edge portion 62 of opening portion 61, which is an example of the prevention portion that prevents the attachment of mounting structure 10 in a state where mounting member 20 is mounted on mounted member 30.

Specifically, opening portion 61 of attachment member 60 is defined by opening edge portion 62, and is smaller than the outer shape of mounting structure 10 in a state where mounting member 20 is mounted on mounted member 30, and mounting structure 10 in its entirety cannot be inserted thereto.

When mounting structure 10 is attached to attachment member 60, mounting structure 10 is first carried in into an assembly site in a state where mounting member 20 is mounted on mounted member 30.

Then an external force is applied so as to separate mounting member 20 from mounted member 30.

Specifically, an external force to move fitting portion 24 of mounting member 20 in a direction away from fitted portion 34 of mounted member 30 is applied to mounting member 20.

Thus, the external force is applied to shaft portion 242 of mounting member 20 in the pulling-out direction from the inner space of flat plate-shaped extension portions 40, and head portion 244 moves in the direction away from the inner space of flat plate-shaped extension portions 40. As a result of movement of locking portion 246 associated with the movement of head portion 244 in the pulling-out direction, locked portion 46 in a state of being engaged with locking portion 246 is pressed in a radial direction of head portion 244, that is, in a direction in which locked portion 46 is separated, by locking portion 246 and head portion 244 in turn. An external force is applied to flat plate-shaped extension portion 40, in which locked portion 46 is provided, to relatively move with respect to mounted member-main body 32. However, since flat plate-shaped extension portion 40 is fixed to mounted member-main body 32, a stress is applied to a root portion, which is a fixed portion, of flat plate-shaped extension portion 40 by a pressing force concerning locked portion 46 on the side of the leading-end. Since flat plate-shaped extension portion 40 is flat plate-like and the root portion thereof is linear, the stress applied to the root portion is dispersed, and a partial concentration of the stress on the root portion does not occur. Accordingly, flat plate-shaped extension portion 40 does not break due to the elastic deformation of flat plate-shaped extension portion 40, and the state of engagement between locking portion 246 and locked portion 46 is suitably released.

Further, since second fitting portion 26 and second fitted portion 36 are movably fitted in the moving direction when second fitting portion 26 is fitted with second fitted portion 36, mounting member 20 does not regulate movement from mounted member 30 in the pulling-out direction. Accordingly, mounting member 20 can be detached from mounted member 30 only by pulling head portion 244 from flat plate-shaped extension portion 40 to release the state of engagement between locking portion 246 and locked portion 46.

As described above, mounting member 20 can be detached from mounted member 30 by separating head portion 244 from the state of engagement with flat plate-shaped extension portion 40 without concentrating a stress on the root portion of flat plate-shaped extension portion 40. Cylindrical portion 342 of mounted member 30 which is separated from mounting member 20 is then inserted into opening portion 61 of the panel, in which opening portion 61 is defined by opening edge portion 62 that is the prevention portion and in which the panel is attachment member 60, from the outside of the panel, that is, from the outside of the cabin. Thus, mounted member 30 is fixed to attachment member 60 via flange portion 332 in a state where fitted portion 34 faces the inside of the cabin. The attachment of mounted member 30 to attachment member 60 via flange portion 332 may also be performed by fixing flange portion 332 to attachment member 60 with an adhesive or a fastening member such as a bolt.

Thereafter, protruding portion 20a of mounting member 20 is inserted from the side of the cabin into cylindrical portion 342 of mounted member 30 facing from opening portion 61 of the panel to cause the spline of second fitting portion 26 to slide on projection portion 362. While second fitting portion 26 being fitted into second fitted portion 36, head portion 244 is inserted into flat plate-shaped extension portion 40. In this case, flat plate-shaped extension portion 40 elastically deforms by being pressed outwardly by head portion 244 in the thickness direction, and locked portion 46 is pressed outwardly by head portion 244 to move. Head portion 244, while being pressed by locked portion 46, moves between flat plate-shaped extension portions 40 on a deeper side than locked portion 46. Locked portion 46 slides on the outer surface of head portion 244, exceeds head portion 244, and engages with locking portion 246 located on the side of the base end rather than head portion 244.

Thus, mounting member 20 can be mounted on mounted member 30, which is attached to attachment member 60, to assemble attachment structure 100 attached to attachment member 60.

Further, in a case where the panel which is attachment member 60 is interposed between mounting member 20 and mounted member 30 when mounting member 20 and mounted member 30 form mounting structure 10, the state of attachment between the panel and mounted member 30 can be released by detaching mounting member 20 from mounted member 30. Accordingly, mounting member 20 can be attached and detached to and from mounted member 30 e.g. when repairing parts disposed within the panel, and the work can be performed easily.

### <Effects>

According to mounting structure 10 of the present embodiment, the fitting between mounting member 20 and mounted member 30 is released by releasing the engagement between locking portion 246 and locked portion 46 by application of an external force to separate mounting member 20 from mounted member 30.

Thus, even in the case of the attachment to the panel which is attachment member 60 including opening edge portion 62 which is the prevention portion that prevents the attachment in a state where mounting member 20 is mounted on mounted member 30, mounting structure 10 in a state where mounting member 20 is mounted on mounted member 30 is first carried in. Then head portion 244 is pulled out from between flat plate-shaped extension portions 40 without damaging flat plate-shaped extension portions 40 to release the state of engagement between locking portion 246 and locked portion 46, and thus, mounting member 20 can be detached from mounted member 30. Subsequently, mounted member 30 is attached to attachment member 60, and then mounting member 20 is fitted into mounted member 30 in a state of being attached to attachment member 60, and thus, mounting structure 10 can be attached to attachment member 60.

The embodiment of the present invention has been described thus far. Note that, the above description is only illustration of a preferred embodiment of the present invention, and the scope of the present invention is not limited to this. That is, the descriptions of the configuration of the above-mentioned device and the shape of each portion are only exemplary, and it is obvious that various changes and additions to these examples are possible within the scope of the present invention, which is defined by the appended claims.

### Industrial Applicability

The mounting structure and the attachment structure according to the present invention exhibit an effect capable of easily attaching and detaching a mounting member, which is mounted on a mounted member, without breakage even when attaching and detaching the mounting member, and are useful for use in a structure including a hood open lever, a trunk open lever, or the like.

### Reference Signs List

10 Mounting structure
20 Mounting member
20a Protruding portion
22 Mounting member-main body
24 Fitting portion
26 Second fitting portion
30 Mounted member
32 Mounted member-main body
33 Cover portion
34 Fitted portion
36 Second fitted portion
40 Flat plate-shaped extension portion
46 Portion to be locked (hereinafter, referred to as "locked portion")
60 Attachment member
61 Opening portion
62 Opening edge portion
100 Attachment structure
221 Operation portion
242 Shaft portion
244 Head portion
246 Locking portion
262 Spline
332 Flange portion
342 Cylindrical portion
362 Projection portion

## Claims

1. A mounting structure (10), comprising:
a mounting member (20); and
a mounted member (30) on which the mounting member (20) is mounted, wherein:
the mounting member (20) includes a mounting member-main body (22), and a fitting portion (24) which is provided in the mounting member-main body (22);
the mounted member (30) includes a cover portion (33), a mounted member-main body (32) which is freely rotatably mounted within the cover portion (33) so as to be mounted via the cover portion (33), and a fitted portion (34) which is provided in the mounted member-main body (32);
the fitting portion (24) includes a shaft portion (242) protruding and extending from the mounting member-main body (22), a head portion (244) provided on a side of a leading-end of the shaft portion (242), and a locking portion (246) provided in a peripheral direction of the shaft portion between the shaft portion (242) and the head portion (244);
the fitted portion (34) includes three or more flat plate-shaped extension portions (40) protruding and extending from the mounted member-main body (32), and locked portions (46) which are provided on respective sides of leading-ends of the plate-shaped extension portions (40);
the flat plate-shaped extension portions (40) are respectively disposed with their wide surfaces facing the head portion (244) at positions where the flat plate-shaped extension portions (40) surround and form an inner space in which the head portion (244) is accommodated;
the root portions of the flat extension portions (40) that are respectively fixed to mounted member-main body (32) are linear along the circumferential direction of the head portion (244);
the locked portion (46) is formed linear along the circumferential direction of the head portion (244);
the mounting member (20) is fitted into the mounted member (30) by engagement between the locking portion (246) and the locked portion (46) by inserting the head portion (244) between the flat plate-shaped extension portions (40) to cause the flat plate-shaped extension portions (40) to elastically deform and the head portion (244) to be accommodated between the flat plate-shaped extension portions (40); and
fitting between the mounting member (20) and the mounted member (30) is released by releasing the engagement between the locking portion (246) and the locked portion (46) by application of an external force so as to separate the mounting member (20) from the mounted member (30).

2. The mounting structure (10) according to claim 1, wherein:
the mounting member (20) includes a second fitting portion (26);
the mounted member (30) includes a second fitted portion (36) which is fitted into the second fitting portion (26); and
the second fitted portion (36) is provided with a projection portion (362) which slides in a moving direction, and which engages in a direction perpendicular to the moving direction when the second fitted portion (36) is fitted into the second fitting portion (26).

3. An attachment structure, comprising:
the mounting structure (10) according to claim 1 or 2; and
an attachment member (60) to which the mounting structure (10) is attached, wherein:
the mounted member (30) which forms the mounting structure (10) is attached to the attachment member (60), and
the attachment member (60) includes a prevention portion (62) which prevents the mounting structure (10) from being attached to an attachment position in a state where the mounted member (30) is attached to the attachment member (60), and which allows the mounting structure (10) to be attached to the attachment position in a state where the mounted member (30) is separated from the mounting member (10).

## Patentansprüche

1. Montagestruktur (10), umfassend:
ein Montagelement (20); und
ein montiertes Element (30), auf das das Montagelement (20) montiert ist, wobei:
das Montagelement (20) einen Montagelement-Hauptkörper (22) und einen Anpass-Abschnitt (24), der bei dem Montagelement-Hauptkörper (22) vorgesehen ist, umfasst;
das montierte Element (30) einen Abdeckabschnitt (33), einen Montiertes-Element-Hauptkörper (32), der frei drehbar innerhalb des Abdeckabschnitts (33) montiert ist, sodass er durch den Abdeckabschnitt (33) montiert ist, und einen Angepasst-Abschnitt (34), der bei dem Montiertes-Element-Hauptkörper (32) vorgesehen ist, umfasst;
der Anpass-Abschnitt (24) einen Schaftabschnitt (242), der von dem Montagelement-Hauptkörper (22) vorsteht und sich von ihm erstreckt, einen Kopfabschnitt (244), der auf einer Seite eines vorderen Endes des Schaftabschnitts (242) vorgesehen ist, und einen Verriegelungsabschnitt (246), der in einer Umfangsrichtung des Schaftabschnitts zwischen dem Schaftabschnitt (242) und dem Kopfabschnitt (244) vorgesehen ist, umfasst;
der Angepasst-Abschnitt (34) drei oder mehr flache plattenförmige Verlängerungsabschnitte (40), die von dem Montiertes-Element-Hauptkörper (32) vorstehen und sich von ihm erstrecken, und verriegelte Abschnitte (46), die auf jeweiligen Seiten von vorderen Enden der plattenförmigen Verlängerungsabschnitte (40) vorgesehen sind, umfasst;
die flachen plattenförmigen Verlängerungsabschnitte (40) jeweils derart angeordnet sind, dass ihre Breitflächen dem Kopfabschnitt (244) in Positionen zugewandt sind, in denen die flachen plattenförmigen Verlängerungsabschnitte (40) umgeben und einen Innenraum bilden, in dem der Kopfabschnitt (244) aufgenommen ist;
die Wurzelabschnitte der flachen Verlängerungsabschnitte (40), die jeweils an dem Montiertes-Element-Hauptkörper (32) befestigt sind, geradlinig entlang der Umfangsrichtung des Kopfabschnitts (244) sind;
der verriegelte Abschnitt (46) geradlinig entlang der Umfangsrichtung des Kopfabschnitts (244) ausgebildet ist; das Montagelement (20) in das montierte Element (30) durch Eingriff zwischen dem Verriegelungsabschnitt (246) und dem verriegelten Abschnitt (46) durch Einführen des Kopfabschnitts (244) zwischen die flachen plattenförmigen Verlängerungsabschnitte (40) eingesteckt ist, um zu bewirken, dass sich die flachen plattenförmigen Verlängerungsabschnitte (40) elastisch verformen und dass der Kopfabschnitt (244) zwischen den flachen plattenförmigen Verlängerungsabschnitten (40) aufgenommen wird; und
ein Schluss zwischen dem Montagelement (20) und dem montierten Element (30) durch Lösen des Eingriffs zwischen dem Verriegelungsabschnitt (246) und dem verriegelten Abschnitt (46) durch Aufbringen einer äußeren Kraft, um das Montagelement (20) von dem montierten Element (30) zu trennen, gelöst wird.

2. Montagestruktur (10) nach Anspruch 1, wobei:
das Montagelement (20) einen zweiten Einsteckabschnitt (26) umfasst;
das montierte Element (30) einen zweiten Aufsteckabschnitt (36) umfasst, der auf den zweiten Einsteckabschnitt (26) aufgesteckt wird; und
der zweite Aufsteckabschnitt (36) mit einem Vorsprungsabschnitt (362) versehen ist, der in einer Bewegungsrichtung gleitet und in einer zur Bewegungsrichtung perpendikularen Richtung in Eingriff kommt, wenn der zweite Aufsteckabschnitt (36) auf den zweiten Einsteckabschnitt (26) aufgesteckt wird.

3. Befestigungsstruktur, umfassend:
die Montagestruktur (10) nach Anspruch 1 oder 2: und
ein Befestigungselement (60), an dem die Montagestruktur (10) befestigt ist, wobei:
das montierte Element (30), das die Montagestruktur (10) bildet, an dem Befestigungselement (60) befestigt ist, und das Befestigungselement (60) einen Verhinderungsabschnitt (62) umfasst, der das Befestigen der Montagestruktur (10) an einer Befestigungsstelle in einem Zustand verhindert, in dem das montierte Element (30) an dem Befestigungselement (60) befestigt ist, und der das Befestigen der Montagestruktur (10) an der Befestigungsstelle in einem Zustand zulässt, in dem das montierte Element (30) von dem Montagelement (10) getrennt ist.

## Revendications

1. Structure de montage (10), comprenant :
un élément de montage (20) ; et
un élément monté (30) sur lequel l'élément de montage (20) est monté :
l'élément de montage (20) comprenant un corps principal (22) d'élément de montage et une partie d'ajustement (24) qui est disposée dans le corps principal (22) d'élément de montage ;
l'élément monté (30) comprenant une partie couvercle (33), un corps principal (32) d'élément monté, qui est monté rotatif librement à l'intérieur de la partie couvercle (33) de façon à être monté par l'intermédiaire de la partie couvercle (33), et une partie ajustée (34) qui est disposée dans le corps principal (32) d'élément monté ;
la partie d'ajustement (24) comprenant une partie d'arbre (242) faisant saillie et s'étendant à partir du corps principal (22) d'élément de montage, une partie de tête (244) disposée sur un côté d'une extrémité avant de la partie d'arbre (242) et une partie de verrouillage (246) disposée dans une direction périphérique de la partie d'arbre entre la partie d'arbre (242) et la partie de tête (244) ;
la partie ajustée (34) comprenant trois parties d'extension en forme de plaque plate (40) ou plus, faisant saillie et s'étendant à partir du corps principal (32) d'élément monté, et des parties verrouillées (46) qui sont disposées sur des côtés respectifs d'extrémités avant des parties d'extension en forme de plaque (40) ;
les parties d'extension en forme de plaque plate (40) étant respectivement disposées avec leurs surfaces larges orientées vers la partie de tête (244) en des positions où les parties d'extension en forme de plaque plate (40) entourent et forment un espace interne dans lequel la partie de tête (244) est logée ;
les parties de base des parties d'extension plates (40) qui sont respectivement fixées au corps principal (32) d'élément monté étant linéaires le long de la direction circonférentielle de la partie de tête (244) ;
la partie verrouillée (46) étant formée linéaire le long de la direction circonférentielle de la partie de tête (244) ;
l'élément de montage (20) étant ajusté dans l'élément monté (30) par mise en prise entre la partie de verrouillage (246) et la partie verrouillée (46) par insertion de la partie de tête (244) entre les parties d'extension en forme de plaque plate (40) pour amener les parties d'extension en forme de plaque plate (40) à se déformer élastiquement et la partie de tête (244) à se loger entre les parties d'extension en forme de plaque plate (40) ; et
l'ajustement entre l'élément de montage (20) et l'élément monté (30) étant libéré par libération de la prise entre la partie de verrouillage (246) et la partie verrouillée (46) par application d'une force externe de façon à séparer l'élément de montage (20) de l'élément monté (30).

2. Structure de montage (10) selon la revendication 1 :
l'élément de montage (20) comprenant une deuxième partie d'ajustement (26) ;
l'élément monté (30) comprenant une deuxième partie ajustée (36) qui est ajustée dans la deuxième partie d'ajustement (26) ; et
la deuxième partie ajustée (36) étant pourvue d'une partie en saillie (362) qui coulisse dans une direction de déplacement et qui vient en prise dans une direction perpendiculaire à la direction de déplacement lorsque la deuxième partie ajustée (36) est ajustée dans la deuxième partie d'ajustement (26).

3. Structure d'attache, comprenant :
la structure de montage (10) selon la revendication 1 ou 2 ; et
un élément d'attache (60) auquel la structure de montage (10) est attachée :
l'élément monté (30) qui forme la structure de montage (10) étant attaché à l'élément d'attache (60) et
l'élément d'attache (60) comprenant une partie de prévention (62) qui empêche l'attache de la structure de montage (10) à une position d'attache dans un état dans lequel l'élément monté (30) est attaché à l'élément d'attache (60) et qui permet l'attache de la structure de montage (10) à la position d'attache dans un état dans lequel l'élément monté (30) est séparé de l'élément de montage (10).
